# EUROPEAN PATENT APPLICATION

(11) **EP 4 667 769 A1**
(43) Date of publication of application: **24.12.2025**
(21) Application number: 24756803.3
(22) Date of filing: 09.02.2024
(51) Int. Cl.: F16C 35/067, F16C 19/06, F16C 33/58, F16C 33/62

(54) **ROLLING BEARING AND BEARING DEVICE**

(30) Priority: 15.02.2023 JP 2023021611; 15.02.2023 JP 2023021616
(71) Applicant: NTN Corporation, Osaka-shi Osaka 530-0005 (JP)
(72) Inventor: KAWAGUCHI, Hayato, Iwata-shi, Shizuoka 438-8510 (JP); FUJIKAKE, Yasuhito, Iwata-shi, Shizuoka 438-8510 (JP); TANAKA, Shintaro, Iwata-shi, Shizuoka 438-8510 (JP)
(74) Representative: Grünecker Patent- und Rechtsanwälte PartG mbB
(86) International application number: PCT/JP2024/004487
(87) International publication number: WO 2024/171958

(57) **Abstract**

A rolling bearing (1) is provided in which an outer ring (2) has, on its outer periphery, a fitting surface (2b) fitted to a housing (10) as a fixed member, and a relief surface (2c) separating the fitting surface (2b) over the entire width of the fitting surface (2b), and opposed to the inner peripheral surface (10a) of the housing (10) with a radial gap larger than the radial gap between the fitting surface (2b) and the inner peripheral surface (10a). The relief surface (2c) is machined to have a roughness of Ra 5.0 µm or less.

## Description

### TECHNICAL FIELD

The present invention relates to a rolling bearing supporting a rotary shaft with the rolling bearing fitted to the inner peripheral surface of a fixed member with a clearance fit, and a bearing device including the rolling bearing.

### BACKGROUND ART

In automobiles and electric vehicles (EVs), the shafts of transmissions, motors, and eAxles (drive units for EVs) are supported by rolling bearings such as deep groove ball bearings, and the outer ring of such a rolling bearing is typically fitted to the cylindrical inner peripheral surface of a housing serving as a fixed member of a bearing device, which includes the rolling bearing, with a clearance fit such that the rolling bearing is easily mounted to the housing. Due to this, an unbalanced load on the shaft under load or during high-speed rotation may cause creep, so that the outer ring is circumferentially displaced with respect to the housing.

As the mechanism of the creep of the bearing rings (outer ring and inner ring) of the rolling bearing, it has been known that traveling waves generated on the surfaces of the bearing rings move the bearing rings. Specifically, when a load is applied from the rolling elements (e.g., balls or rollers) of the rolling bearing to the raceway surfaces of the bearing rings, the surfaces of the bearing rings located immediately below the raceway surfaces protrude upward, so that waves are generated. Since the rolling elements revolve as the rolling bearing rotates, the waves on the surfaces of the bearing rings turn into traveling waves. The traveling waves exhibit behavior as circumferential and radial peristaltic motion over the entire load application region of the rolling bearing. If the outer ring is fitted to the housing, serving as the fixed member, with a clearance fit, the traveling waves tend to move the housing in the opposite direction to the revolving direction of the rolling elements, but the housing is pushed back due to its resistance, resulting in the creep that causes the outer ring to be displaced in the revolving direction of the rolling elements, i.e., in the same direction as the rotating direction of the rolling bearing.

In view of this, the below-identified Patent Document 1 has proposed a bearing device comprising a rolling bearing including an outer ring having on its outer periphery a cylindrical fitting surface extending circumferentially and a relief surface separating the fitting surface across the entire width of the fitting surface and opposed to the inner peripheral surface of a housing with a radial gap larger than a radial gap between the fitting surface and the inner peripheral surface. This relief surface is formed such that the radial gap remains between the outer ring of the rolling bearing and the inner peripheral surface of the housing in a load application region upon application of the maximum radial load (which is, for example, 0.4 times the basic dynamic load rating) within a set range.

According to this arrangement, even if the creep occurs once at the outer ring due to the radial load applied to the rolling bearing with the relief surface of the outer ring of the rolling bearing being out of the load application region, the wavy deformation of the outer ring does not act as the traveling waves, which cause the creep, at a location where the relief surface of the outer ring is not in contact with the inner peripheral surface of the housing for as long as the relief surface of the outer ring is in the load application region, so that the creep of the outer ring can be reduced after the relief surface of the outer ring enters the load application region.

### PRIOR ART DOCUMENT

### PATENT DOCUMENT

Patent Document 1: Japanese Unexamined Patent Application Publication No. 2020-45987

### SUMMARY OF THE INVENTION

### PROBLEMS TO BE SOLVED BY THE INVENTION

In the foregoing rolling bearing including the outer ring having on its outer periphery the relief surface, however, the circumferential region of the outer ring where the relief surface is formed becomes more thin-walled and is therefore lower in strength than the circumferential region of the outer ring except the relief surface. Consequently, the outer ring may be broken due to stress concentration or the like upon reception of the load.

Also, in the bearing device described in Patent Document 1, it has been considered that the effect of reducing the creep of the outer ring of the rolling bearing varies depending on the circumferential expansion of the relief surface of the outer ring, i.e., an angle about the center of the outer ring (hereinafter, also referred to as a "relief surface angle"). Although the relief surface angle α is settable so as to satisfy 0 < α ≤ 2θ where θ is the pitch angle between each adjacent pair of rolling elements arranged with certain circumferential pitches, the relief surface angle α is preferably set so as to satisfy 0.5θ ≤ α ≤ θ in order for the outer ring to have a shape capable of reducing deflection and stress owing to the radial load.

However, if the fixed member as the housing is made of a light metal such as aluminum lower in rigidity than iron and the amount of deformation of the outer ring of the rolling bearing owing to the applied radial load increases, there is a possibility that the creep of the outer ring cannot be reduced sufficiently.

Hence, it is a first object of the present invention to provide a rolling bearing including an outer ring fitted to a fixed member with a clearance fit, the rolling bearing being capable of reducing creep while preventing the outer ring from being broken.

Further, it is a second object of the present invention to provide a bearing device in which the outer ring of a rolling bearing is fitted to a fixed member with a clearance fit, the bearing device being capable of sufficiently reducing the creep of the outer ring even if the rigidity of the fixed member is low.

### MEANS FOR SOLVING THE PROBLEMS

In order to achieve the above first object, the inventors of the present application conducted an operation experiment on a rolling bearing (deep groove ball bearing) including an outer ring having a relief surface so as to investigate the state of the surface layer of the outer ring including the relief surface, and have thus found that the relief surface of the outer ring easily cracks if the roughness of the relief surface is high/large. Specifically, the relief surface and a fitting surface are formed on the outer ring in different steps, and the average roughness of the relief surface after machining is about Ra 6.3 µm. However, the roughness may significantly increase depending on how the relief surface is machined. It is considered that if the roughness of the relief surface is high, the valleys of the irregularities of the surface crack due to stress concentration when tensile stress is applied to the relief surface which is in a load application region, and the cracks may grow and lead to breakage. Hence, the inventors of the present application set the roughness range of the relief surface in which crack growth does not occur in the outer ring, based on numerical analysis and experiments on various conditions.

Specifically, a rolling bearing is used in which comprises an outer ring; an inner ring; and a plurality of rolling elements rollably disposed between the outer ring and the inner ring, wherein the rolling bearing rotatably supports a rotary shaft to which the inner ring is attached, with the outer ring fitted to a cylindrical inner peripheral surface of an external fixed member with a clearance fit, characterized in that the outer ring has, on an outer periphery of the outer ring,: a cylindrical fitting surface extending circumferentially, and at least one relief surface separating the fitting surface over an entire width of the fitting surface, and opposed to the inner peripheral surface of the fixed member with a radial gap larger than a radial gap between the fitting surface and the inner peripheral surface, wherein the at least relief surface of the outer ring is machined to have a roughness of Ra 5.0 µm or less (arrangement 1).

In the rolling bearing of the arrangement 1, by forming the relief surface on the outer ring, it is possible to reduce the creep of the outer ring, and, by setting the roughness of the relief surface to Ra 5.0 µm or less, it is possible to prevent breakage of the outer ring due to crack growth in the valleys of the irregularities on the relief surface.

In the arrangement 1, an arrangement 2 is desirably used in which the outer ring includes a connection portion located between the fitting surface and the at least relief surface, and having a single rounded shape comprising a single circular arc-shaped surface, or a composite rounded shape comprising a plurality of circular arc-shaped surfaces circumferentially connected to each other, the connection portion smoothly and continuously connecting the fitting surface and the at least relief surface to each other.

If the fitting surface and the relief surface of the outer ring are directly connected to each other, when a load application region of the outer ring includes the boundary between the fitting surface and the relief surface, a load which cannot be received by the relief surface concentrates near the boundary, so that an excessive contact pressure, i.e., an edge load is generated. Due to this edge load, high shearing stress occurs near the boundary between the fitting surface and the relief surface, so that the outer ring could crack and break. In contrast thereto, if the arrangement 2 is used, a contact area near the connection portion between the fitting surface and the relief surface increases, and an edge load is less likely to occur. It is therefore possible to prevent breakage of the outer ring due to an edge load.

In the arrangement 1 or 2, an arrangement 3 is preferably used in which the at least relief surface of the outer ring has a single rounded shape comprising a single circular arc-shaped surface. If the relief surface is a flat surface, the outer ring becomes thin-walled, which may result in insufficient strength. If the arrangement 3 is used, it is possible to easily ensure necessary strength.

In any one of the arrangements 1 to 3, since the hardness of the relief surface of the outer ring is desirably HRC 60 to 65 as with the outer peripheral surface of a normal bearing, to realize this, an arrangement 4 is preferably used in which the outer ring is formed of a bearing steel or is formed of a steel material subjected to a hardening heat treatment such as quenching and tempering, carburizing and quenching, or nitriding.

Also, in any one of the arrangements 1 to 4, an arrangement 5 may be used in which the at least relief surface of the outer ring on the outer periphery thereof comprises a plurality of relief surfaces.

Also, in any one of the arrangements 1 to 5, an arrangement 6 is desirably used in which s/t ≥ 1.0 × 10⁻² is satisfied, where s is a maximum radial depth of the at least relief surface or each of the relief surfaces relative to a radial dimension of the fitting surface of the outer ring, and t is a minimum thickness between a raceway surface of the outer ring and the fitting surface of the outer ring. With this arrangement, as described below, in a case where the maximum radial load applied is 0.4 times the basic dynamic load rating as the use condition of the rolling bearing, it has been confirmed by numerical analysis that even if the outer ring is elastically deformed by the maximum radial load, a radial gap reliably remains between the relief surface in the load application region and the inner peripheral surface of the fixed member.

In order to achieve the second object, the inventors of the present application conducted a creep speed confirmation test on various conditions on a bearing device comprising a rolling bearing including an outer ring fitted with a clearance fit to a fixed member made of a light metal, the outer ring having, on its outer periphery, a relief surface, and the inventors confirmed the lower limit of a relief surface angle that is capable of sufficiently reducing the creep of the outer ring even when a radial load set to the maximum on the normal use condition is applied. The inventors set, based on the results of the test, a relief surface angle range capable of reducing the creep of the outer ring and reducing deflection and stress of the outer ring.

Specifically, a bearing device is used which comprises: a fixed member having a cylindrical inner peripheral surface; and a rolling bearing disposed on an inner peripheral side of the fixed member, wherein the rolling bearing comprises: an outer ring; an inner ring; and a plurality of rolling elements rollably disposed between the outer ring and the inner ring at regular intervals in a circumferential direction, and wherein the rolling bearing rotatably supports a rotary shaft to which the inner ring is attached, with the outer ring fitted to the inner peripheral surface of the fixed member with a clearance fit, characterized in that the fixed member is formed of a light metal; wherein the outer ring of the rolling bearing has, on an outer periphery of the outer ring,: a cylindrical fitting surface extending circumferentially, and a relief surface separating the fitting surface over an entire width of the fitting surface, and opposed to the inner peripheral surface of the fixed member with a radial gap larger than a radial gap between the fitting surface and the inner peripheral surface, and wherein 0.7θ ≤ α ≤ θ is satisfied, where α is an angle (relief surface angle) around a center of the outer ring, the angle corresponding to a circumferential length of the relief surface of the outer ring, and θ is a pitch angle between each adjacent pair of the rolling elements (arrangement 7).

In the bearing device of the arrangement 7, even if, by using a fixed member made of a light metal having low rigidity, the amount of deformation of the outer ring increases due to a radial load, since the relief surface angle is suitably set, it is possible to sufficiently reduce the creep of the outer ring.

In the arrangement 7, an arrangement 8 is desirably used in which s/t ≥ 1.0 × 10⁻² is satisfied, where s is a maximum radial depth of the relief surface relative to a radial dimension of the fitting surface of the outer ring, and t is a minimum thickness between a raceway surface of the outer ring and the fitting surface of the outer ring. The reason is the same as described with respect to the arrangement 6.

In the arrangement 7 or 8, an arrangement 9 is preferably used in which the inner peripheral surface of the fixed member is machined to have a roughness of Rz 7.0 µm or less or Ra 3.0 µm or less. With this arrangement, it is possible to reduce the amount of wear of the inner peripheral surface of the housing due to the creep of the outer ring until the relief surface enters the load application region, when a radial load is applied with the relief surface being out of the load application region.

In any one of the arrangements 7 to 9, an arrangement 10 is preferably used in which the relief surface of the outer ring has a single rounded shape comprising a single circular arc-shaped surface. The reason is the same as described with respect to the arrangement 3.

If the arrangement 10 is used, an arrangement 11 is desirably used in which R₂ < R₁ < 7.2R₂ is satisfied, where R₁ is a radius of curvature of the relief surface of the outer ring, and R₂ is a radius of the fitting surface.

Specifically, it is necessary to satisfy R₂ < R₁ so that the relief surface of the outer ring is opposed to the inner peripheral surface of the fixed member with a radial gap larger than the radial gap between the fitting surface and the inner peripheral surface. However, if R₁ is too large, when the load application region of the outer ring includes the boundary between the fitting surface and the relief surface, the stress generated near this boundary exceeds the destructive stress of the material forming the outer ring, so that the outer ring could crack and break. In contrast thereto, if the arrangement 11 is used, as described below, in a normal rolling bearing including an outer ring made of high carbon chromium bearing steel (SUJ2), it has been confirmed by numerical analysis that, if the maximum radial load applied is 0.4 times the basic dynamic load rating, the stress generated near the boundary between the fitting surface and the relief surface of the outer ring can be made smaller than the destructive stress.

Also, in any one of the arrangements 7 to 11, the hardness of the relief surface of the outer ring is desirably HRC 60 to 65 as with the outer peripheral surface of a normal bearing, and, to realize this, an arrangement 12 is preferably used in which the outer ring is formed of a bearing steel, or a steel material subjected to a hardening heat treatment such as quenching and tempering, carburizing and quenching, or nitriding.

### EFFECTS OF THE INVENTION

In the rolling bearing (arrangements 1 to 6) of the present invention, as described above, since the outer ring has, on its outer periphery, a relief surface separating the cylindrical fitting surface over the entire width of the fitting surface, and the roughness of the relief surface is Ra 5.0 µm or less, it is possible to reduce the creep of the outer ring, while preventing breakage of the outer ring from due to stress concentration at the relief surface.

Also, in the bearing device (arrangements 7 to 12) of the present invention, as described above, since the outer ring of the rolling bearing has, on its outer periphery, a relief surface separating the cylindrical fitting surface over the entire width of the fitting surface and formed at a suitable relief surface angle, it is possible to sufficiently reduce the creep of the outer ring, even if the fixed member is made of a light metal having low rigidity.

### BRIEF DESCRIPTION OF THE DRAWINGS

Fig. 1 is a perspective view of a bearing device including a rolling bearing according to an embodiment of the present invention (Fig. 1 shows only the left half of a housing).
Fig. 2 is a front view showing the use state of the bearing device of Fig. 1.
Fig. 3 is a front view of an outer ring of Fig. 1.
Fig. 4 is an explanatory front view showing the shape of a relief surface of the outer ring of Fig. 1.
Fig. 5 is an explanatory front view showing the depth of the relief surface of the outer ring of Fig. 1.
Fig. 6 is a graph showing results of analysis concerning the relationship between the shape of the relief surface of the outer ring of Fig. 1 and a generated stress ratio.
Fig. 7 is a graph showing results of a static destructive test conducted on the rolling bearing of Fig. 1.
Fig. 8 is a front view of a portion of a variation e of the outer ring of Fig. 1.
Fig. 9 is a front view of another variation of the outer ring of Fig. 1.
Fig. 10 is a graph showing results of a test concerning the relationship between a relief surface angle and a creep speed ratio of the outer ring of Fig. 1.

### BEST MODE FOR CARRYING OUT THE INVENTION

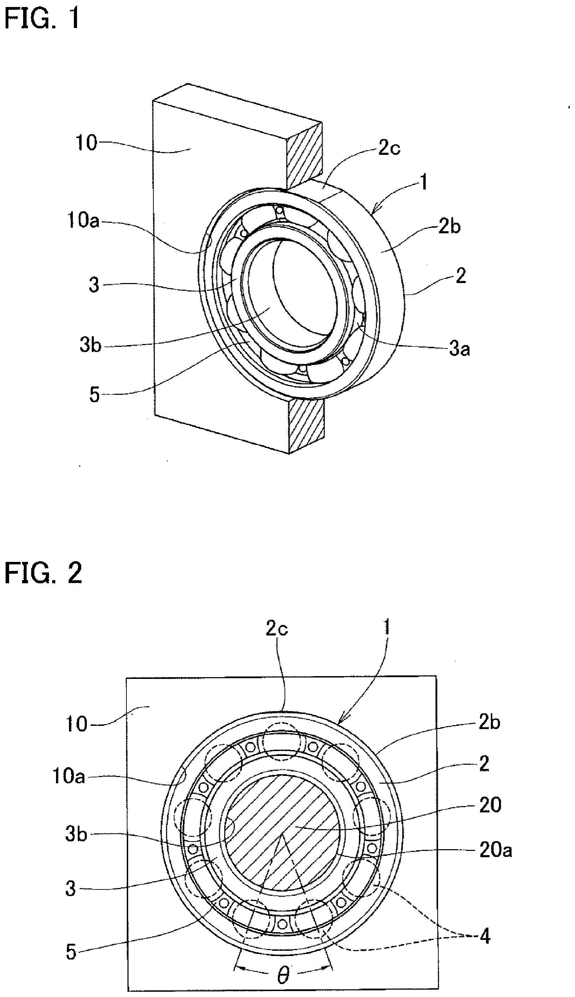

An embodiment of the present invention will be described below with reference to the drawings. As shown in Figs. 1 and 2, a bearing device according to this embodiment comprises a housing 10 having a cylindrical inner peripheral surface 10a and serving as a fixed member, and a rolling bearing 1 disposed on the inner peripheral side of the housing 10. The rolling bearing 1 is a deep groove ball bearing including an outer ring 2, an inner ring 3, a plurality of balls 4 as a plurality of rolling elements rollably disposed between the outer ring 2 and the inner ring 3, and a cage 5 retaining the balls 4 at regular intervals in the circumferential direction. The rolling bearing 1 rotatably supports a rotary shaft 20 to which the inner ring 3 is attached, with the outer ring 2 fitted to the inner peripheral surface 10a of the housing 10 with a clearance fit.

The rotary shaft 20 is, for example, a transmission shaft of the transmission of an automobile. The housing 10 is, for example, a partition wall constituting a portion of the transmission case of the automobile. The rolling bearing 1 receives a radial load acting between the housing 10 and the rotary shaft 20.

The inner ring 3 of the rolling bearing 1 has, on its outer periphery, a circumferentially extending raceway surface 3a, and also has, on its inner periphery, a circumferentially extending cylindrical fitting surface 3b. The inner ring 3 is fitted to the outer peripheral surface 20a of the rotary shaft 20 with an interference fit, and rotates in unison with the rotary shaft 20.

As shown in Figs. 1 to 3, the outer ring 2 has, on its inner periphery, a circumferentially extending raceway surface 2a, and also has, on its outer periphery, circumferentially extending a cylindrical fitting surface 2b, and a relief surface 2c separating the fitting surface 2b over the entire width of the fitting surface 2b and opposed to the inner peripheral surface 10a of the housing 10 with a radial gap larger than the radial gap between the fitting surface 2b and the inner peripheral surface 10a.

The radial dimension of the fitting surface 2b of the outer ring 2 is smaller than the diameter of the inner peripheral surface 10a of the housing 10, so that the fitting surface 2b is brought into contact with the inner peripheral surface 10a of the housing 10 by a radial load applied from the rotary shaft 20 to the rolling bearing 1.

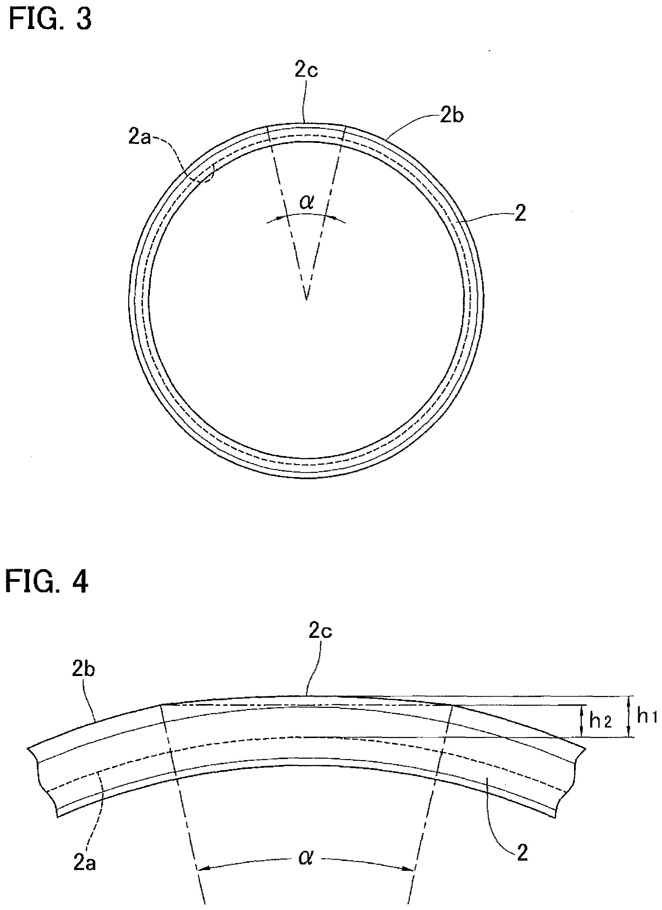

As shown in Fig. 3, the circumferential length of the relief surface 2c of the outer ring 2 can be defined by an angle α around the center of the outer ring 2. The angle α, which corresponds to the circumferential length of the relief surface 2c, can be set to, e.g., 0 < α ≤ 2θ, where θ is the pitch angle between each adjacent pair of balls 4 as shown in Fig. 2. The angle α is preferably set to 0.5θ ≤ α ≤ θ in order to allow the outer ring 2 to have a shape capable of reducing deflection and stress due to a radial load.

The relief surface 2c has a single rounded shape comprising a single circular arc-shaped surface. Due to this, as shown in Fig. 4, the minimum wall thickness h₁ between the relief surface 2c and the raceway surface 2a of the outer ring 2 is larger than the wall thickness h₂ between the raceway surface 2a and a flat relief surface 2c (see the chain double-dashed line in Fig. 4), Therefore, it is possible to easily ensure required strength.

When determining the shape and dimensions of the relief surface 2c, it is necessary to consider leaving a radial gap between the relief surface 2c and the inner peripheral surface 10a of the housing 10 in a load application region when the maximum radial load within a set range is applied to the rolling bearing 1.

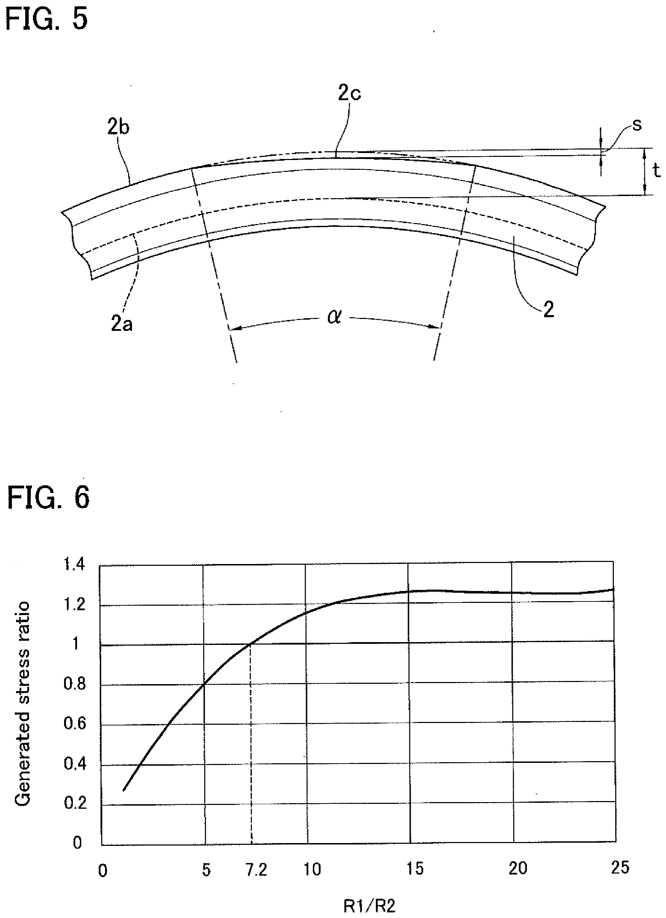

By using the ratio s/t (see Fig. 5), where s is the maximum radial depth of the relief surface 2c relative to the radial dimension of the fitting surface 2b of the outer ring 2 (the shown chain double-dashed line indicates an imaginary extension line of the fitting surface 2b), and t is the minimum thickness between the raceway surface 2a and the fitting surface 2b of the outer ring 2, how the presence or absence of the contact between the relief surface 2c of the outer ring 2 and the inner peripheral surface 10a of the housing 10 changes was examined by numerical analysis while changing the applied load. Table 1 shows the results thereof. In table 1, P represents the applied load and C represents the basic dynamic load rating.

**[Table 1]**

| P/C | s/t | | | | | |
|---|---|---|---|---|---|---|
| | 0.0 | 2.5 × 10⁻³ | 5.0 × 10⁻³ | 7.5 × 10⁻³ | 1.0 × 10⁻² | 1.2 × 10⁻² |
| 0.1 | × | × | ○ | ○ | ○ | ○ |
| 0.2 | × | × | ○ | ○ | ○ | ○ |
| 0.3 | × | × | × | ○ | ○ | ○ |
| 0.4 | × | × | × | × | ○ | ○ |

| | | | | | | |
|---|---|---|---|---|---|---|
| ○ : The relief surface does not come into contact with the housing × : The relief surface comes into contact with the housing | | | | | | |

Table 1 shows that naturally, the larger the ratio *s*/*t,* the less likely the relief surface 2c of the outer ring 2 is to come into contact with the inner peripheral surface 10a of the housing 10, and that even if P/C is 0.4 (P/C = 0.4), the relief surface 2c does not come into contact with the inner peripheral surface 10a, provided that the ratio s/t is not less than 1.0 × 10⁻². In this rolling bearing, since the maximum radial load applied is 0.4 times the basic dynamic load rating (P/C = 0.4) as a use condition taking a normal safety factor into consideration, the shape and dimensions of the relief surface 2c are designed on the condition of s/t ≥ 1.0 × 10⁻² such that even when the maximum radial load is applied, a radial gap remains between the relief surface 2c and the inner peripheral surface 10a of the housing 10 in the load application region.

In order to allow the relief surface 2c of the outer ring 2 to be opposed to the inner peripheral surface 10a of the housing 10 with a radial gap larger than the radial gap between the fitting surface 2b and the inner peripheral surface 10a, it is necessary to satisfy R₂ < R₁, where R₁ is the radius of curvature of the relief surface 2c and R₂ is the radius of the fitting surface 2b. If R₁ is too large, when the load application region of the outer ring 2 includes the boundary between the fitting surface 2b and the relief surface 2c, the stress generated near this boundary exceeds the destructive stress of the material forming the outer ring 2, so that the outer ring 2 could crack and break.

In view of the above, when the maximum radial load (P/C = 0.4) set as the use condition was applied to a deep groove ball bearing (bearing model No. 6208) of which the outer ring is made of high carbon chromium bearing steel (SUJ2), the relationship between R₁/R₂ and the ratio (generated stress ratio) of the stress generated near the boundary between the fitting surface and the relief surface of the outer ring to destructive stress was investigated by numerical analysis. Fig. 6 shows the results thereof.

The results in Fig. 6 show that if R₁/R₂ is smaller than 7.2, the stress generated near the boundary between the fitting surface and the relief surface of the outer ring is smaller than the destructive stress. Therefore, the radius of curvature R₁ of the relief surface 2c is set so as to satisfy R₂ < R₁ < 7.2R₂ in the bearing device according to this embodiment.

The relief surface preferably has a single rounded shape as shown in this embodiment in terms of strength and workability. However, the relief surface may have a composite rounded shape comprising a plurality of circular arc-shaped surfaces circumferentially connected to each other, or may be a flat surface as long as strength is ensured. In this case, too, the relief surface desirably has a shape in which the generated stress ratio when the maximum radial load is applied is less than 1.

The hardness of the relief surface 2c is desirably HRC 60 to 65 as with the outer peripheral surface of a normal bearing. To realize this, the outer ring 2 is preferably formed of a bearing steel or formed of a steel material subjected to a hardening heat treatment such as quenching and tempering, carburizing and quenching, or nitriding.

In order to prevent breakage of the outer ring 2, the roughness of the relief surface 2c is set as follows:

That is, in order to machine the relief surface 2c, turning, grinding, plunge cutting, forging or the like can be used. However, it is considered that if the surface irregularities on the relief surface 2c caused by the machining are large as described above, the valleys of the irregularities could crack due to stress concentration, leading to breakage of the outer ring 2. Therefore, the relationship between the roughness of the relief surface 2c and the presence or absence of crack growth was investigated by numerical analysis. Table 2 shows the results thereof.

**[Table 2]**

| Relief surface roughness Ra(*µ*m) | 1.0 | 2.0 | 3.0 | 4.0 | 5.0 | 6.0 | 7.0 |
|---|---|---|---|---|---|---|---|
| Was crack growth observed? | No | No | No | No | No | Yes | Yes |

The results in table 2 show that if the roughness of the relief surface 2c is Ra 5.0 µm or less, crack growth does not occur. Therefore, in the rolling bearing 1 of this embodiment, the roughness of the relief surface 2c of the outer ring 2 is set to Ra 5.0 µm or less.

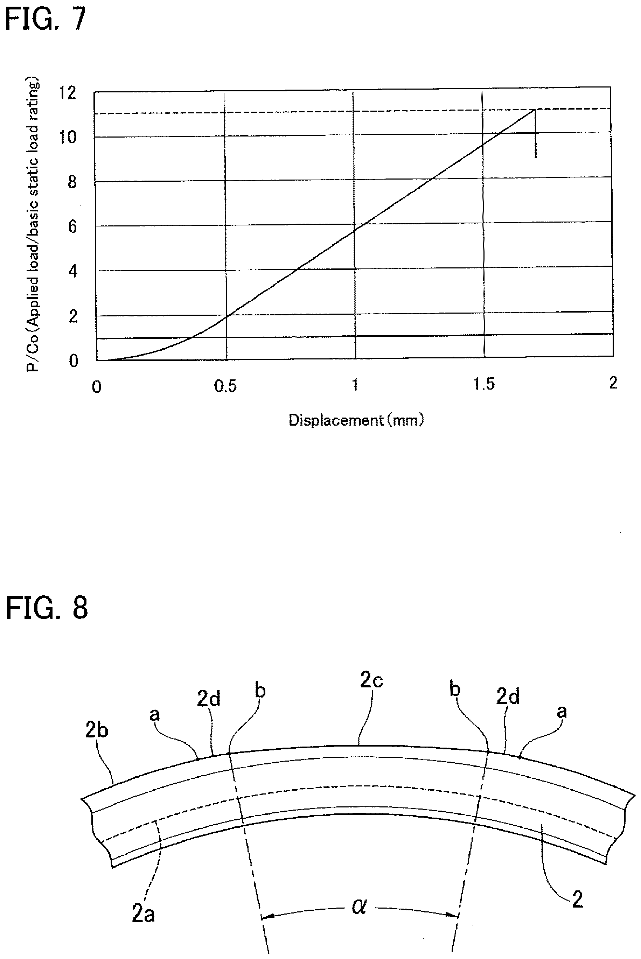

By conducting a static destructive test on the rolling bearing 1 of this embodiment, it was confirmed that, as shown in Fig. 7, the breakage load is about 11 times the basic static load rating, i.e., the rolling bearing 1 has sufficient strength.

In the above-described rolling bearing 1 of this embodiment, since the outer ring 2 has, on its outer periphery, a relief surface 2c separating the cylindrical fitting surface 2b over the entire width of the fitting surface 2b, and the relief surface 2c is machined so as to have a roughness of Ra 5.0 µm or less, it is possible to reduce the creep of the outer ring 2 while preventing breakage of the outer ring 2 due to stress concentration at the relief surface 2c.

Fig. 8 shows a variation of the outer ring 2 of the above embodiment. In this variation, the outer ring 2 includes connection portions 2d located between the fitting surface 2b and the relief surface 2c, and each having a single rounded shape comprising a single circular arc-shaped surface, the connection portions 2d smoothly and continuously connecting the fitting surface 2b and the relief surface 2c to each other. In Fig. 8, "a" refers to the boundary between the fitting surface 2b and each connection portion 2d, and "b" refers to the boundary between the relief surface 2c and each connection portion 2d. The sentence "smoothly and continuously connecting" means that there is no ridge-shaped edge between the fitting surface 2b and the relief surface 2c. Each connection portion 2d may have a composite rounded shape comprising a plurality of circular arc-shaped surfaces circumferentially connected to each other.

By forming the connection portions 2d on the outer periphery of the outer ring 2 as described above, contact areas near the connection portions 2d increase even in a state in which the load application region of the outer ring 2 concurrently includes the fitting surface 2b and the relief surface 2c, so that an edge load generated is reduced. It is therefore possible to prevent breakage of the outer ring 2 due to the edge load.

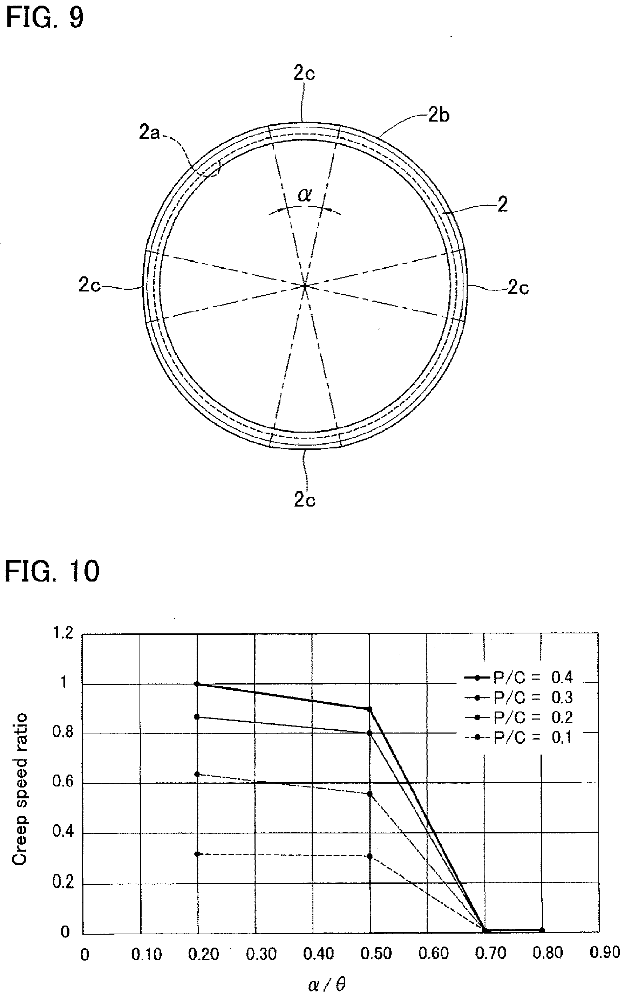

Fig. 9 shows another variation of the outer ring 2 of the above embodiment. In this variation, the outer ring 2 has, on its outer periphery, four relief surfaces 2c arranged at equal intervals. By thus increasing the number thereof, i.e., forming the four relief surfaces 2c, compared to the arrangement where one relief surface 2c is formed (see Fig. 3), it is possible to reduce a rotation angle until each relief surface 2c enters the load application region due to the creep when a radial load is applied to the rolling bearing 1 with the relief surface 2c being out of the load application region. It is therefore possible to reduce the creep in a shorter time.

Next, a variation is described in which the housing 10 of the above embodiment is made of aluminum. As described above, the relief surface angle α, which defines the circumferential length of the relief surface 2c of the outer ring 2, is preferably set to 0.5θ ≤ α ≤ θ, where θ is the pitch angle between each adjacent pair of balls 4. However, it is considered that if the housing 10 is made of aluminum, which is lower in rigidity than iron, the amount of deformation of the outer ring 2 increases due to an applied radial load, and thus the creep of the outer ring 2 cannot be reduced sufficiently in some cases.

In view of this, the relationship between the relief surface angle α, which corresponds to the circumferential length of the relief surface of the outer ring, and a ratio (creep speed ratio) of the creep speed of the outer ring to a value on the conditions of P/C = 0.4 and α = 0.2θ was investigated by numerical analysis. Fig. 10 shows the results thereof.

The results in Fig. 10 show that the creep of the outer ring can be reduced as long as the relief surface angle α is not less than 0.7 times the pitch angle θ between each adjacent pair of rolling elements even if the maximum radial load (P/C = 0.4) within the use condition is applied. In order to reduce the deflection and stress of the outer ring due to a radial load, the relief surface angle α is preferably set to an angle corresponding to the pitch angle θ or less. Therefore, in this variation, the relief surface angle α of the outer ring 2 is set to 0.7θ ≤ α ≤ θ.

In this variation, since, as described above, the relief surface angle α of the outer ring 2 of the rolling bearing 1 is set to 0.7θ ≤ α ≤ θ, it is possible to sufficiently reduce the creep of the outer ring 2 even if the housing 10 is made of aluminum, which has low rigidity.

When a radial load is applied with the relief surface 2c of the outer ring 2 being out of the load application region, the creep of the outer ring 2 occurs until the relief surface 2c enters the load application region. However, if the inner peripheral surface 10a of the housing 10 is machined to have a roughness of Rz 7.0 µm or less or Ra 3.0 µm or less, it is also possible to reduce wear of the inner peripheral surface 10a of the housing 10 due to the creep of the outer ring 2.

The above-described embodiment is a mere example in every respect, and the present invention is not limited thereto. The scope of the present invention is indicated not by the above description but by the claims, and should be understood to include all modifications within the meaning and scope equivalent to the scope of the claims.

For example, while, in the embodiment, a variation is described in which the housing is made of aluminum, the housing may be made of a light metal that is lower in rigidity than iron as with aluminum.

The present invention is not limited to a deep groove ball bearing as described in the embodiment, and is effectively applicable to a rolling bearing supporting a rotary shaft with the outer ring fitted to a fixed member with a clearance fit, or a bearing device including the rolling bearing.

### DESCRIPTION OF REFERENCE NUMERALS

1: rolling bearing
2: outer ring
2a: raceway surface
2b: fitting surface
2c: relief surface
2d: connection portion
3: inner ring
4: ball (rolling element)
10: housing (fixed member)
10a: inner peripheral surface
20: rotary shaft

## Claims

1. A rolling bearing (1) comprising:
an outer ring (2);
an inner ring (3); and
a plurality of rolling elements (4) rollably disposed between the outer ring (2) and the inner ring (3),
wherein the rolling bearing (1) rotatably supports a rotary shaft (20) to which the inner ring (3) is attached, with the outer ring (2) fitted to a cylindrical inner peripheral surface (10a) of an external fixed member (10) with a clearance fit,
**characterized in that** the outer ring (2) has, on an outer periphery of the outer ring (2),:
a cylindrical fitting surface (2b) extending circumferentially, and
at least one relief surface (2c) separating the fitting surface (2b) over an entire width of the fitting surface (2b), and opposed to the inner peripheral surface (10a) of the fixed member (10) with a radial gap larger than a radial gap between the fitting surface (2b) and the inner peripheral surface (10a),
wherein the at least relief surface (2c) of the outer ring (2) is machined to have a roughness of Ra 5.0 µm or less.

2. The rolling bearing (1) according to claim 1, wherein the outer ring (2) includes a connection portion (2d) located between the fitting surface (2b) and the at least relief surface (2c), and having a single rounded shape comprising a single circular arc-shaped surface, or a composite rounded shape comprising a plurality of circular arc-shaped surfaces circumferentially connected to each other, the connection portion (2d) smoothly and continuously connecting the fitting surface (2b) and the at least relief surface (2c) to each other.

3. The rolling bearing (1) according to claim 1 or 2, wherein the at least relief surface (2c) of the outer ring (2) has a single rounded shape comprising a single circular arc-shaped surface.

4. The rolling bearing (1) according to any one of claims 1 to 3, wherein the outer ring (2) is formed of a bearing steel, or a steel material subjected to a hardening heat treatment.

5. The rolling bearing (1) according to any one of claims 1 to 4, wherein the at least relief surface (2c) of the outer ring (2) on the outer periphery thereof comprises a plurality of relief surfaces (2c).

6. The rolling bearing (1) according to any one of claims 1 to 5, wherein s/t ≥ 1.0 × 10⁻² is satisfied, where s is a maximum radial depth of the at least relief surface (2c) or each of the relief surfaces (2c) relative to a radial dimension of the fitting surface (2b) of the outer ring (2), and t is a minimum thickness between a raceway surface (2a) of the outer ring (2) and the fitting surface (2b) of the outer ring (2).

7. A bearing device comprising:
a fixed member (10) having a cylindrical inner peripheral surface (10a); and
a rolling bearing (1) disposed on an inner peripheral side of the fixed member (10),
wherein the rolling bearing (1) comprises:
an outer ring (2);
an inner ring (3); and
a plurality of rolling elements (4) rollably disposed between the outer ring (2) and the inner ring (3) at regular intervals in a circumferential direction, and
wherein the rolling bearing (1) rotatably supports a rotary shaft (20) to which the inner ring (3) is attached, with the outer ring (2) fitted to the inner peripheral surface (10a) of the fixed member (10) with a clearance fit,
**characterized in that** the fixed member (10) is formed of a light metal;
wherein the outer ring (2) of the rolling bearing (1) has, on an outer periphery of the outer ring (2),:
a cylindrical fitting surface (2b) extending circumferentially, and
a relief surface (2c) separating the fitting surface (2b) over an entire width of the fitting surface (2b), and opposed to the inner peripheral surface (10a) of the fixed member (10) with a radial gap larger than a radial gap between the fitting surface (2b) and the inner peripheral surface (10a), and
wherein 0.70 ≤ α ≤ θ is satisfied, where α is an angle around a center of the outer ring (2), the angle corresponding to a circumferential length of the relief surface (2c) of the outer ring (2), and θ is a pitch angle between each adjacent pair of the rolling elements (4).

8. The bearing device according to claim 7, wherein s/t ≥ 1.0 × 10⁻² is satisfied, where s is a maximum radial depth of the relief surface (2c) relative to a radial dimension of the fitting surface (2b) of the outer ring (2), and t is a minimum thickness between a raceway surface (2a) of the outer ring (2) and the fitting surface (2b) of the outer ring (2).

9. The bearing device according to claim 7 or 8, wherein the inner peripheral surface of the fixed member (10) is machined to have a roughness of Rz 7.0 µm or less or Ra 3.0 µm or less.

10. The bearing device according to any one of claims 7 to 9, wherein the relief surface (2c) of the outer ring (2) has a single rounded shape comprising a single circular arc-shaped surface.

11. The bearing device according to claim 10, wherein R₂ < R₁ < 7.2R₂ is satisfied, where R₁ is a radius of curvature of the relief surface (2c) of the outer ring (2), and R₂ is a radius of the fitting surface (2b).

12. The bearing device according to any one of claims 7 to 11, wherein the outer ring (2) is formed of a bearing steel, or a steel material subjected to a hardening heat treatment.
